# EUROPÄISCHE PATENTSCHRIFT

(11) **EP 1 322 871 B1**
(45) Veröffentlichungstag und Bekanntmachung des Hinweises auf die Patenterteilung: **28.04.2004**
(21) Anmeldenummer: 01982125.5
(22) Anmeldetag: 19.09.2001
(51) Int. Cl.: F16D 65/16

(54) **RADBREMSVORRICHTUNG**
WHEEL BRAKE DEVICE
DISPOSITIF DE FREIN SUR ROUE

(30) Priorität: 22.09.2000 DE 10046981
(43) Veröffentlichungstag der Anmeldung: 02.07.2003
(73) Patentinhaber: ROBERT BOSCH GMBH, 70442 Stuttgart (DE)
(72) Erfinder: BAUMANN, Dietmar, 71282 Hemmingen (DE); SCHMIDT, Hanniel, 76307 Karlsbad (DE); VOLLERT, Herbert, 71665 Vaihingen/Enz (DE); KELLER, Frieder, 76698 Ubstadt-Weiher (DE)
(86) Internationale Anmeldenummer: PCT/DE2001/003596
(87) Internationale Veröffentlichungsnummer: WO 2002/025136

(56) Entgegenhaltungen:
- WO-A-01/44677
- WO-A-90/14979
- DE-A- 3 824 812
- US-A- 4 290 507

## Beschreibung

### Stand der Technik

Die Erfindung betrifft eine Radbremsvorrichtung mit den Merkmalen Oberbegriffs des Anspruchs 1.

Derartige Radbremsvorrichtungen sind an sich bekannt siehe z.B. US-A-4 290 507. Sie weisen einen Reibbremsbelag auf, der zur Erzeugung eines Bremsmoments gegen einen mit einem Fahrzeugrad drehfesten Bremskörper, beispielsweise eine Bremsscheibe oder eine Bremstrommel, drückbar ist. Das Drücken des Bremsbelags gegen den Bremskörper erfolgt heutzutage überwiegend hydraulisch, es werden allerdings in zunehmendem Maße auch Radbremsvorrichtungen vorgeschlagen, bei denen der Reibbremsbelag elektromechanisch gegen den Bremskörper gedrückt wird.

### Vorteile der Erfindung

Die erfindungsgemäße Radbremsvorrichtung mit den Merkmalen des Anspruchs 1 weist einen schwenkbaren Hebel zum Drücken des Reibbremsbelags gegen den Bremskörper auf. Durch Schwenken des Hebels ist der Reibbremsbelag zur Erzeugung eines Bremsmoments gegen den Bremskörper drückbar und zum Lösen der Radbremsvorrichtung durch Rückschwenken des Hebels vom Bremskörper abhebbar. Des weiteren weist die erfindungsgemäße Radbremsvorrichtung ein Speicherfederelement auf, das mit Abstand vom Reibbremsbelag an dem Hebel angreift und diesen im Sinne eines Drückens des Reibbremsbelags gegen den Bremskörper, also im Sinne eines Betätigens der Radbremsvorrichtung, beaufschlagt. Das Speicherfederelement kann beispielsweise eine Metallfeder oder eine Feder aus einem sonstigen elastischen Material, beispielsweise eine Schraubenfeder sein. Auch ist beispielsweise die Verwendung einer Gasdruckfeder als Speicherfederelement möglich. Ein Teil, ggf. auch die gesamte, zum Drücken des Reibbremsbelags gegen den Bremskörper notwendige Energie stammt vom Speicherfederelement, wodurch sich eine Betätigungsenergie zum Betätigen der erfindungsgemäßen Radbremsvorrichtung verringert.

Der Hebel der erfindungsgemäßen Radbremsvorrichtung weist eine nicht-gerade Schiebeführung auf. An dieser Schiebeführung wird der Hebel schwenkbar von einer Abstützung abgestützt, die ihrerseits in Längsrichtung des Hebels verschiebbar ist. Der Hebel wird also an drei Stellen beaufschlagt Zum einen wird der Hebel vom Reibbremsbelag beaufschlagt bzw. umgekehrt beaufschlagt der Hebel den Reibbremsbelag beim Betätigen der Radbremsvorrichtung. Des weiteren wird der Hebel mit Abstand vom Reibbremsbelag vom Speicherfederelement. Im Sinne einer Betätigung der Radbremsvorrichtung und eines Drückens des Reibbremsbelags gegen den Bremskörper beaufschlagt. Als drittes wird der Hebel von der Abstützung beaufschlagt, an der er sich schwenkbar abstützt. Da die Abstützung und damit eine Stelle, an der der Hebel schwenkbar abgestützt wird, in Längsrichtung des Hebels verschiebbar ist, lassen sich wirksame Hebelarme, mit denen der Reibbremsbelag und das Speicherfederelement im Hebel angreifen, verändern. Durch Verschieben der Abstützung in Längsrichtung des Hebels verändert sich ein Verhältnis der wirksamen Hebelarme mit denen der Reibbremsbelag einerseits und das Speicherfederelement andererseits am Hebel angreifen. Durch Verschieben der Abstützung entlang des Hebels lässt sich somit eine vom Speicherfederelement über den Hebel auf den Reibbremsbelag ausgeübte Kraft verändern. Dies wird bei der erfindungsgemäßen Radbremsvorrichtung zu deren Betätigung genutzt: Zum Drücken des Reibbremsbelags gegen den Bremskörper wird die Abstützung des Hebels in Längsrichtung des Hebels so verschoben, dass sich ein wirksamer Hebelarm, mit dem das Speicherfederelement am Hebel angreift, vergrößert und/oder ein wirksamer Hebelarm, mit dem der Bremskörper am Hebel angreift, verkürzt. Durch Verschieben der Abstützung in Längsrichtung des Hebels lässt sich somit eine Kraft, die das Speicherfederelement über den Hebel auf den Reibbremsbelag ausübt, d. h. eine Kraft, mit der das Speicherfederelement über den Hebel den Reibbremsbelag gegen den Bremskörper drückt, verändern und dadurch ein gewünschtes Bremsmoment erzeugen. Zum Lösen der Radbremsvorrichtung wird die Abstützung in entgegengesetzter Richtung verschoben.

Um eine zum Verschieben der Abstützung und damit zum Betätigen der Radbremsvorrichtung notwendige Kraft niedrig zu halten, wird erfindungsgemäß der Verlauf der nicht-geraden Schiebeführung des Hebels so gewählt, dass die Schiebeführung an der jeweiligen Stützstelle parallel oder zumindest näherungsweise parallel zu einer Verschieberichtung der Abstützung verläuft. Mit Stützstelle ist diejenige Stelle gemeint, an der die Abstützung den Hebel schwenkbar abstützt. Durch die Verschiebbarkeit der Abstützung ist die Stützstelle in Längsrichtung des Hebels, und zwar entlang seiner Schiebeführung, beweglich. Verläuft die Schiebeführung des Hebels an der jeweiligen Stützstelle parallel zur Verschieberichtung der Abstützung, so wird von der Abstützung bei ihrer Verschiebung keine Kraft zum Verschwenken des Hebels und zum Drücken des Reibbremsbelags gegen den Bremskörper aufgebracht. Zum Verschieben der Abstützung und damit zum Betätigen der Radbremsvorrichtung braucht in diesem Fall ausschließlich die zum Verschieben notwendige Reibungskraft überwunden zu werden. Verläuft die Schiebeführung an der jeweiligen Stützstelle näherungsweise parallel zur Verschieberichtung der Abstützung, so ist die von der Abstützung beim Verschieben aufgebrachte Kraft zum Verschwenken des Hebels und zum Drücken des Reibbremsbelags gegen den Bremskörper gering. Dadurch ist eine zum Betätigen der Radbremsvorrichtung notwendige Kraft niedrig. Die zum Drücken des Reibbremsbelags gegen den Bremskörper notwendige Kraft wird vollständig oder teilweise vom Speicherfederelement aufgebracht. Die erfindungsgemäße Radbremsvorrichtung eignet sich dadurch zu einer elektromechanischen Betätigung mit einem leistungsschwachen, kleinbauenden und leichten Elektromotor. Eine Belastung eines elektrischen Bordnetzes eines mit der erfindungsgemäßen Radbremsvorrichtung ausgerüsteten Kraftfahrzeugs ist gering. Des weiteren ist ein Bremsmoment der erfindungsgemäßen Radbremsvorrichtung fein dosierbar.

Die Unteransprüche haben vorteilhafte Ausgestaltungen und Weiterbildungen der im Hauptanspruch angegebenen Erfindung zum Gegenstand.

Bei einer Ausgestaltung der Erfindung ist eine selbsttätige Nachstelleinrichtung zum Einstellen eines Lüftspiels zwischen dem Reibbremsbelag und dem Bremskörper zum Ausgleich von Belagverschleiß vorgesehen (Anspruch 6). Durch die Nachstelleinrichtung wird zumindest näherungsweise erreicht, dass eine Winkelstellung des Hebels und damit die Hebelverhältnisse, mit denen das Speicherfederelement und der Reibbremsbelag am Hebel angreifen, unabhängig von einer Abnutzung des Reibbremsbelags sind. Die Kraft, mit der das Speicherfederelement über den Hebel den Reibbremsbelag gegen den Bremskörper drückt ist dadurch nur von der Stützstelle, an der die Abstützung den Hebel abstützt, und nicht vom Abnutzungszustand des Reibbremsbelags abhängig.

### Zeichnung

Die Erfindung wird nachfolgend anhand eines in der Zeichnung dargestellten Ausführungsbeispiels näher erläutert. Es zeigen:
Figur 1 ein Ausführungsbeispiel einer erfindungsgemäßen Radbremsvorrichtung in gelöstem Zustand; und
Figur 2 die Radbremsvorrichtung aus Figur 1 in betätigtem Zustand.

Die Zeichnung ist als schematisierte, vereinfachte Darstellung zu verstehen.

### Beschreibung des Ausführungsbeispiels

Die in der Zeichnung dargestellte, erfindungsgemäße Radbremsvorrichtung 10 ist als Scheibenbremse ausgebildet. Die Radbremsvorrichtung 10 weist einen Bremssattel 12 auf, der als quer zu einer Bremsscheibe 14 beweglicher Schwimmsattel ausgebildet ist. Im Bremssattel 12 liegt ein fester Reibbremsbelag 16 ein, der auf einer Seite der Bremsscheibe 14 angeordnet ist. Ein anderer Reibbremsbelag 18 ist auf einer gegenüberliegenden Seite der Bremsscheibe 14 im Bremssattel 12 angeordnet. Dieser Reibbremsbelag 18 ist mittels eines Bremsschuhs 20 quer zur Bremsscheibe 14 im Bremssattel 12 verschiebbar geführt. Zur Betätigung der Radbremsvorrichtung 10 wird der verschiebbare Reibbremsbelag 18 gegen die eine Seite der Bremsscheibe 14 gedrückt. Eine Reaktionskraft verschiebt in an sich bekannter Weise den Bremssattel 12 quer zur Bremsscheibe 14, so dass der andere, feste Reibbremsbelag 16 gegen die andere Seite der Bremsscheibe 14 gedrückt und die Bremsscheibe 14 gebremst wird.

Zur Betätigung der Radbremsvorrichtung 10, d. h. zum Drücken des Reibbremsbelags 18 gegen die Bremsscheibe 14, weist die erfindungsgemäße Radbremsvorrichtung 10 einen Hebel 22 auf, der in etwa parallel zur Bremsscheibe 14 im Bremssattel 12 angeordnet ist. Der Hebel 22 ist um eine gedachte und in Längsrichtung des Hebels 22 verschiebbare Schwenkachse schwenkbar, die parallel zu einer gedachten, von der Bremsscheibe 14 aufgespannten Ebene verläuft. Die Verschiebung der Schwenkachse des Hebels 22 in dessen Längsrichtung wird weiter unten noch zu erläutern sein. Der Bremsschuh 20 liegt nahe einem Ende des Hebels 22 an diesem an. Durch Schwenken des Hebels 22 in Richtung der Bremsscheibe 14 wird der Bremsschuh 20 verschoben und der Reibbremsbelag 18 gegen die Bremsscheibe 14 gedrückt. Ein Anschlag 24 begrenzt einen Rückschwenkwinkel des Hebels 22.

An einem anderen, dem Bremsschuh 20 fernen Ende des Hebels 22 ist ein Speicherfederelement 26 angeordnet. Das Speicherfederelement 26 ist im dargestellten und beschriebenen Ausführungsbeispiel der Erfindung als Schraubendruckfeder ausgebildet, die sich an einem im Bremssattel 12 festen Widerlager 28 abstützt. Das als Schraubendruckfeder ausgebildete Speicherfederelement 26 ist auf derselben Seite des Hebels 22 angeordnet wie der Bremsschuh 20.

Der Hebel 22 weist eine gekrümmte Kulissenbahn 30 auf, in die ein Kulissenzapfen 32 eingreift. Der Kulissenzapfen 32 ist fest an einem Stützbock 34 angebracht, der eine Spindelmutter 36 aufweist, mit der der Stützbock 34 auf eine Spindel 38 aufgesetzt ist. Die Spindel 38 verläuft näherungsweise parallel zum Hebel 22, so dass der Stützbock 34 mit dem Kulissenzapfen 32 in Längsrichtung des Hebels 22 verschiebbar ist. Der Stützbock 34 mit dem in die Kulissenbahn 30 des Hebels 22 eingreifenden Kulissenzapfen 32 bildet eine Abstützung des Hebels 22, die den Hebel 22 schwenkbar abstützt. Der Kulissenzapfen 32 definiert die gedachte und in Längsrichtung des Hebels 22 verschiebbare Schwenkachse des Hebels 22. Die Kulissenbahn 30 und der Kulissenzapfen 32 bilden eine nicht-gerade Schiebeführung 30, 32 des Hebels 22. Die Kulissenbahn 30 ist aus Richtung der Bremsscheibe 14 gesehen konvex und aus Richtung der Spindel 38 gesehen konkav gekrümmt, wobei der Hebel 22 zwischen der Bremsscheibe 14 und der Spindel 38 angeordnet ist. Die Krümmung der Kulissenbahn 30 kann kreisbogenförmig oder in einer anderen Weise bogenförmig oder in sonstiger Weise gekrümmt sein. Der Verlauf der Krümmung der Kulissenbahn 30 wird weiter unten noch genauer zu beschreiben sein.

Die Spindelmutter 36 des Stützbocks 34 und die Spindel 38 bilden einen Spindeltrieb 36, 38 der erfindungsgemäßen Radbremsvorrichtung 10. Zum rotierenden Antrieb der Spindel 38 weist die Radbremsvorrichtung 10 einen Elektromotor 40 auf, der die Spindel 38 direkt oder auch indirekt über ein nicht dargestelltes Getriebe rotierend antreiben und auf diese Weise die Abstützung 32, 34 in Längsrichtung des Hebels 22 verschieben kann.

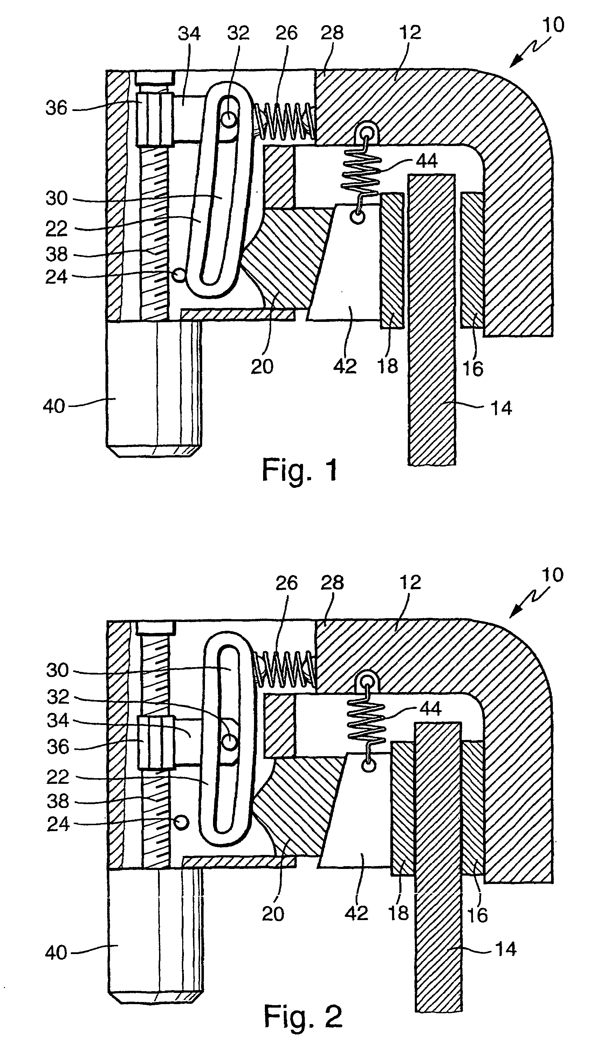

In einer gelösten Stellung der Radbremsvorrichtung 10 (Figur 1) befindet sich die Abstützung 32, 34 im Bereich des Endes des Hebels 22, an dem das Speicherfederelement 26 angreift. Der Hebel 22 liegt an seinem dem Speicherfederelement 26 fernen Ende am Anschlag 24 an und die Reibbremsbeläge 16, 18 sind von der Bremsscheibe 14 abgehoben. Zur Betätigung der Radbremsvorrichtung 10 wird die Abstützung 32, 34 mittels des Elektromotors 40 und den Spindeltrieb 36, 38 in Richtung des Bremsschuhs 20 verschoben. Wie ein Vergleich von Figur 1 und Figur 2 zeigt, verkürzt sich durch eine solche Verschiebung der Abstützung 32, 34 des Hebels 22 ein wirksamer Hebelarm, mit dem der Hebel 22 am Bremsschuh 20 bzw. der Bremsschuh 20 am Hebel 22 angreift. Der wirksame Hebelarm, mit dem der Hebel 22 am Bremsschuh 20 bzw. der Bremsschuh 20 am Hebel 22 angreift, ist ein Abstand vom Kulissenzapfen 32 zu einer Angriffsstelle des Bremsschuhs 20 am Hebel 22 in Längsrichtung des Hebels 22. Zugleich mit der Verkürzung des wirksamen Hebelarms, mit dem der Hebel 22 am Bremsschuh 20 angreift, verlängert sich durch die Verschiebung der Abstützung 32, 34 des Hebels 22 in Richtung des Bremsschuhs 20 ein wirksamer Hebelarm, mit dem das Speicherfederelement 26 am Hebel 22 angreift. Der wirksame Hebelarm, mit dem das Speicherfederelement 26 am Hebel 22 angreift, ist der Abstand einer Angriffsstelle des Speicherfederelements 26 am Hebel 22 vom Kulissenzapfen 32 in Längsrichtung des Hebels 22. Aufgrund der Verschiebung der Abstützung 32, 34 des Hebels 22 in Richtung des Bremsschuhs 20 verschwenkt das Speicherfederelement 26 den Hebel 22 und drückt über den Hebel 22 und den Bremsschuh 20 den Reibbremsbelag 18 gegen die Bremsscheibe 14, die Bremsscheibe 14 wird gebremst. Wird die Abstützung 32, 34 weiter in Richtung des Bremsschuhs 20 verschoben, so verlängert sich der wirksame Hebelarm, mit dem das Speicherfederelement 26 am Hebel 22 angreift und es verkürzt sich der wirksame Hebelarm, mit dem der Hebel 22 am Bremsschuh 20 angreift weiter, so dass die Kraft, mit der das Speicherfederelement 26 über den Hebel 22 den Reibbremsbelag 18 gegen die Bremsscheibe 14 drückt ansteigt. Die Kraft, mit der das Speicherfederelement 26 über den Hebel 22 den Reibbremsbelag 18 gegen die Bremsscheibe 14 drückt, steigt mit der Verschiebung der Abstützung 32, 34 in Richtung des Bremsschuhs 20 aufgrund des sich ändernden Hebelverhältnisses auch unter Berücksichtigung einer infolge einer Verlängerung des Speicherfederelements 26 nachlassenden Federkraft des Speicherfederelements 26 an. Die Kraft, mit der das Speicherfederelement 26 über den Hebel 22 den Reibbremsbelag 18 gegen die Bremsscheibe 14 drückt ist somit durch Verschiebung der Abstützung 32, 34 in Längsrichtung des Hebels 22 fein dosiert einstellbar.

Zum Lösen der Radbremsvorrichtung 10 wird die Abstützung 32, 34 des Hebels 22 zurück zur Angriffsstelle des Speicherfederelements 26 am Hebel 22 verschoben, der wirksame Hebelarm des Speicherfederelements 26 wird dadurch auf Null verkürzt, das Speicherfederelement 26 übt keine Kraft mehr auf den Bremsschuh 20 aus und die Radbremsvorrichtung 10 ist gelöst. Beim Verschieben der Abstützung 32, 34 zurück zur Angriffsstelle des Speicherfederelements 26 am Hebel 22 wird eine zuvor beim Andrücken des Reibbremsbelags 18 gegen die Bremsscheibe 14 vom Speicherfederelement aufgebrachte Energie in das Speicherfederelement 26 zurückgespeichert. Diese Energie steht zur erneuten Betätigung der Radbremsvorrichtung 10 wieder zur Verfügung. Zu einem aktiven Lösen der Radbremsvorrichtung 10 kann die Abstützung 32, 34 über die Angriffsstelle des Speicherfederelements 26 hinaus vom Bremsschuh 20 weg verschoben werden. Das Speicherfederelement 26 verschwenkt dann den Hebel 22 weg von der Bremsscheibe 14 gegen den Anschlag 24. Diese Rückschwenkbewegung des Hebels 22 kann zum Abheben des Reibbremsbelags 18 von der Bremsscheibe 14 genutzt werden.

Die Krümmung bzw. der Verlauf der Kulissenbahn 30, die die Schiebeführung 30, 32 für die Abstützung 32, 34 des Hebels 22 bildet, ist so gewählt, dass die Kulissenbahn 30 bei Verschiebung der Abstützung 32, 34 an der jeweiligen Stützstelle, an der die Abstützung 32, 34 den Hebel 22 schwenkbar abstützt, parallel oder zumindest näherungsweise parallel zur Spindel 38 verläuft. Da der Hebel 22, wie oben beschrieben, durch die Verschiebung seiner Abstützung 32, 34 verschwenkt, ist die Kulissenbahn 30 gekrümmt, damit die Schiebeführung 30, 32 des Hebels 22 an der jeweiligen durch die Abstützung 32, 34 gebildeten Stützstelle parallel oder näherungsweise parallel zur Verschieberichtung der Abstützung der Abstützung 32, 34, d. h. zur Spindel 38, verläuft. Verläuft die Kulissenbahn 30 an jeder Stützstelle parallel zur Spindel 38, so braucht zum Verschwenken des Hebels 22 keine Kraft und somit auch keine Kraft zum Drücken des Reibbremsbelags 18 gegen die Bremsscheibe 14 aufgebracht werden. Die Kraft zum Schwenken des Hebels 22 und zum Drücken des Reibbremsbelags 18 gegen die Bremsscheibe 14 wird in diesem Fall ausschließlich vom Speicherfederelement 26 aufgebracht. Verläuft die Kulissenbahn 30 an der jeweiligen Stützstelle näherungsweise parallel zur Spindel 38, wird ein Teil der zum Schwenken des Hebels 22 und damit zum Drücken des Reibbremsbelags 18 gegen die Bremsscheibe 14 notwendigen Kraft von der Abstützung 32, 34 und damit vom Elektromotor 40 und der übrige und größere Teil der Kraft vom Speicherfederelement 26 aufgebracht. Ein vom Elektromotor 40 zum Betätigen der erfindungsgemäßen Radbremsvorrichtung 10 durch Verschieben der Abstützung 32, 34 in Längsrichtung des Hebels 22 notwendiges Drehmoment ist infolgedessen niedrig.

Zur Einstellung eines Lüftspiels, d. h. eines Spalts zwischen den Reibbremsbelägen 16, 18 und der Bremsscheibe 14 bei gelöster Radbremsvorrichtung 10, weist die Radbremsvorrichtung 10 eine selbsttätige Nachstelleinrichtung 42, 44 auf. Die Nachstelleinrichtung 42 umfasst einen Keil, der quer verschieblich im Bremsschuh 20 zwischen dem Bremsschuh 20 und dem Reibbremsbelag 18 angeordnet ist. Der Keil 42 wird von einem Federelement 44 in Querrichtung des Bremsschuhs 20 beaufschlagt, wobei das Federelement 44 im dargestellten und beschriebenen Ausführungsbeispiel der Erfindung als Schraubenzugfeder ausgebildet ist, die am Keil 42 und am Bremssattel 12 eingehängt ist. Mit zunehmender Abnutzung der Reibbremsbeläge 16, 18 verschiebt das Federelement 44 den Keil 42 weiter in einen Keilspaft im Bremsschuh 20 hinein, so dass das Lüftspiel der Radbremsvorrichtung 10 konstant bleibt.

Durch die selbsttätige Nachstelleinrichtung 42, 44 wird erreicht, dass die Winkelstellung des Hebels 22 unabhängig von einer Abnutzung der Reibbremsbeläge 16, 18 ist. Die wirksamen Hebelarme, mit denen das Speicherfederelement 26 und der Bremsschuh 20 am Hebel 22 angreifen, sind dadurch unabhängig von einem Abnutzungszustand der Reibbremsbeläge 16, 18 und ausschließlich abhängig von der Verschiebung der Abstützung 32, 34 des Hebels 22 in Längsrichtung des Hebels 22. Die Kraft, mit der das Speicherfederelement 26 über den Hebel 22 den Reibbremsbelag 18 gegen die Bremsscheibe 14 drückt, ist somit unabhängig von einer Abnutzung der Reibbremsbeläge 16, 18.

## Patentansprüche

1. Radbremsvorrichtung für ein Kraftfahrzeug, mit einem Reibbremsbelag, der zur Erzeugung eines Bremsmoments gegen einen mit einem Fahrzeugrad drehfesten Bremskörper drückbar ist, **dadurch gekennzeichnet, dass** die Radbremsvorrichtung (10) einen schwenkbaren Hebel (22) aufweist, mit dem der Reibbremsbelag (18) durch Schwenken des Hebels (22) gegen den Bremskörper (14) drückbar ist, dass die Radbremsvorrichtung (10) ein Speicherfederelement (26) aufweist, das mit Abstand vom Reibbremsbelag (18) an dem Hebel (22) angreift und diesen im Sinne eines Drückens des Reibbremsbelags (18) gegen den Bremskörper (14) beaufschlagt, dass der Hebel (22) eine nicht-gerade Schiebeführung (30, 32) aufweist, über die er sich schwenkbar an einer Abstützung (32, 34) abstützt, die in Längsrichtung des Hebels (22) verschiebbar ist, und dass ein Verlauf der Schiebeführung (30, 32) des Hebels (22) so gewählt ist, dass sie an der jeweiligen Stützstelle zumindest näherungsweise parallel zu einer Verschieberichtung der Abstützung (32, 34) verläuft.

2. Radbremsvorrichtung nach Anspruch 1, **dadurch gekennzeichnet, dass** die Abstützung (32, 34) des Hebels (22) zwischen einer Angriffsstelle des Speicherfederelements (26) am Hebel (22) und einer Angriffsstelle des Reibbremsbelags (18) am Hebel (22) in Längsrichtung des Hebels (22) verschiebbar ist.

3. Radbremsvorrichtung nach Anspruch 1, **dadurch gekennzeichnet, dass** die Radbremsvorrichtung (10) einen Spindeltrieb (36, 38) zum Verschieben der Abstützung (32, 34) des Hebels (22) aufweist.

4. Radbremsvorrichtung nach Anspruch 3, **dadurch gekennzeichnet, dass** die Radbremsvorrichtung (10) einen Elektromotor (40) zum rotierenden Antrieb des Spindeltriebs (36, 38) aufweist.

5. Radbremsvorrichtung nach Anspruch 1, **dadurch gekennzeichnet, dass** die Radbremsvorrichtung (10) eine Nachstelleinrichtung (42, 44) zum Einstellen eines Lüftspiels zwischen dem Reibbremsbelag (18) und dem Bremskörper (14) bei unbetätigter Radbremsvorrichtung (10) aufweist.

6. Radbremsvorrichtung nach Anspruch 5, **dadurch gekennzeichnet, dass** die Nachstelleinrichtung (42, 44) selbsttätig ausgebildet ist.

7. Radbremsvorrichtung nach Anspruch 6, **dadurch gekennzeichnet, dass** die Nachstelleinrichtung (42, 44) einen quer zu einer Andrückrichtung des Reibbremsbelags (18) gegen den Bremskörper (14) verschieblichen Keil (42) aufweist.

## Claims

1. Wheel brake device for a motor vehicle, having a friction brake lining which can be pressed against a brake body, which is rotationally fixed to a vehicle wheel, in order to produce a braking torque, **characterized in that** the wheel brake device (10) has a pivotable lever (22) with which the friction brake lining (18) can be pressed against the brake body (14) by pivoting of the lever (22), **in that** the wheel brake device (10) has a preloaded spring element (26) which engages at a distance from the friction brake lining (18) on the lever (22) and acts upon the latter with the effect of pressing the friction brake lining (18) against the brake body (14), **in that** the lever (22) has a non-straight sliding guide (30, 32) via which it is supported pivotably on a support (32, 34), which can be displaced in the longitudinal direction of the lever (22), and **in that** the profile of the sliding guide (30, 32) of the lever (22) is selected in such a manner that it runs at the particular supporting point at least approximately parallel to a direction of displacement of the support (32, 34).

2. Wheel brake device according to Claim 1, **characterized in that** the support (32, 34) of the lever (22) can be displaced in the longitudinal direction of the lever (22) between an engagement point of the preloaded spring element (26) on the lever (22) and an engagement point of the friction brake lining (18) on the lever (22).

3. Wheel brake device according to Claim 1, **characterized in that** the wheel brake device (10) has a spindle drive (36, 38) for displacing the support (32, 34) of the lever (22).

4. Wheel brake device according to Claim 3, **characterized in that** the wheel brake device (10) has an electric motor (40) for the rotating drive of the spindle drive (36, 38).

5. Wheel brake device according to Claim 1, **characterized in that** the wheel brake device (10) has an adjusting device (42, 44) for setting a ventilation clearance between the friction brake lining (18) and the brake body (14) when the wheel brake device (10) is not actuated.

6. Wheel brake device according to Claim 5, **characterized in that** the adjusting device (42, 44) is formed automatically.

7. Wheel brake device according to Claim 6, **characterized in that** the adjusting device (42, 44) has a wedge (42) which can be displaced transversely with respect to a press-on direction of the friction brake lining (18) against the brake body (14).

## Revendications

1. Dispositif de freinage de roue pour un véhicule automobile, comportant une garniture de freinage à friction qui peut être pressée contre un corps de freinage fixé en rotation à une roue de véhicule, pour créer un couple de freinage,
**caractérisé en ce que**
le dispositif de freinage de roue (10) présente un levier pivotant (22) par lequel la garniture de frein à friction (18) peut être pressée contre le corps de freinage (14) par pivotement du levier (22), le dispositif de freinage de roue (10) présente un élément de ressort accumulateur (26) qui s'engage avec le levier (22) à distance de la garniture de frein à friction (18) et s'y applique dans le sens d'une pression de la garniture de frein à friction (18) contre le corps de freinage (14), le levier (22) présente un guidage de coulissement (30, 32) non droit par lequel il s'appuie de façon pivotante contre un appui (32, 34) qui peut être déplacé dans le sens longitudinal du levier (22), et une trajectoire du guidage de coulissement (30, 32) du levier (22) est choisie de manière telle qu'en chacun des points d'appui le guidage se déplace au moins approximativement parallèlement à une direction de déplacement du support (32, 34).

2. Dispositif de freinage de roue selon la revendication 1,
**caractérisé en ce que**
le support (32, 34) du levier (22) peut se déplacer entre un emplacement d'engagement de l'élément de ressort accumulateur (26) avec le levier (22) et une zone d'engagement avec la garniture de frein à friction (18) avec le levier (22), en direction longitudinale du levier (22).

3. Dispositif de freinage de roue selon la revendication 1,
**caractérisé en ce que**
le dispositif de freinage de roue (10) présente un entraînement à broche (36, 38) pour faire coulisser l'appui (32, 34) du levier (22).

4. Dispositif de freinage de roue selon la revendication 3,
**caractérisé en ce que**
le dispositif de freinage de roue (10) présente un moteur électrique (40) pour un entraînement en rotation de l'entraînement à broche (36, 38).

5. Dispositif de freinage de roue selon la revendication 1,
**caractérisé en ce que**
le dispositif de freinage de roue (10) présente un dispositif de rattrapage (42, 44) pour régler un jeu d'air entre la garniture de frein à friction (18) et le corps de freinage (14) lorsque le dispositif de freinage de roue (10) n'est pas actionné.

6. Dispositif de freinage de roue selon la revendication 5,
**caractérisé en ce que**
le dispositif de rattrapage (42, 44) est constitué de façon à avoir un fonctionnement autonome.

7. Dispositif de freinage de roue selon la revendication 6,
**caractérisé en ce que**
le dispositif de rattrapage (42, 44) présente un coin (42) pouvant coulisser, transversalement à la direction d'application de la garniture de frein à friction (18), contre le corps de freinage (14).
